# EUROPEAN PATENT APPLICATION

(11) **EP 1 783 566 A1**
(43) Date of publication of application: **09.05.2007**
(21) Application number: 05751137.0
(22) Date of filing: 06.06.2005
(51) Int. Cl.: G03H 1/02, G11B 7/0065, G11B 7/24, G11B 7/26

(54) **OPTICAL INFORMATION RECORDING MEDIUM, AND RECORDING METHOD AND MANUFACTURING METHOD THEREOF**

(30) Priority: 28.07.2004 JP 2004220435
(71) Applicant: Sumitomo Electric Industries, Ltd., Osaka-shi, Osaka 541-0041 (JP)
(72) Inventor: USHIRO, Toshihiko, 1-1 Koyakita 1-chome Itami-shi Hyogo (JP); ODA, Kazuhiko, 1-1 Koyakita 1-chome Itami-shi Hyogo (JP); MATSUURA, Takashi, 1-1 Koyakita 1-chome Itami-shi Hyogo (JP)
(74) Representative: HOFFMANN EITLE
(86) International application number: PCT/JP2005/010337
(87) International publication number: WO 2006/011304

(57) **Abstract**

To provide an optical information-recording medium that can easily record information at high density and has excellent durability at low cost.

The optical information-recording medium includes a diamond-like carbon (DLC) layer (2) deposited on a substrate (1), in which information is recorded on the optical information-recording medium by irradiating recording spot regions selected from a plurality of recording spot regions with an energy beam (5) to increase the refractive index of the DLC layer (2) in the irradiated recording spot regions.

## Description

### Technical Field

The present invention relates to optical information-recording media, in particular, an optical information-recording medium which facilitates high density recording and has high durability.

### Background Art

Compact disks (CDs) and digital versatile discs (DVD) are typical examples of optical information-recording media put to practical application known today. However, today's highly information-oriented society demands optical information-recording media to achieve higher recording density. The recording density of optical information media can be increased by decreasing the wavelength of a light beam used for reading and writing. From this standpoint, blue ray discs in which data is written using a blue laser is under development. However, there is a limit to reduction of wavelength of a laser beam for recording, and various other recording methods are attempted to increase the recording density of optical information-recording media (refer to Nonpatent Document 1: OPTRONICS, (2001), No. 11, pp. 149-154).

As is widely known, recording on read-only music CDs currently used is conducted by forming pits (micro-size dents) in a plastic substrate with a stamper. In one pit, a 1-bit data indicating 1 or 0 is written as formation or non-formation of the pit. Whether the data in a particular pit is 1 or 0 is determined by the difference in intensity of reflected light of a reading laser beam. That is, when binary signals, such as 0 and 1, are recorded as in typical CDs, there are only two levels of pit depth including zero depth which indicates absence of a pit.

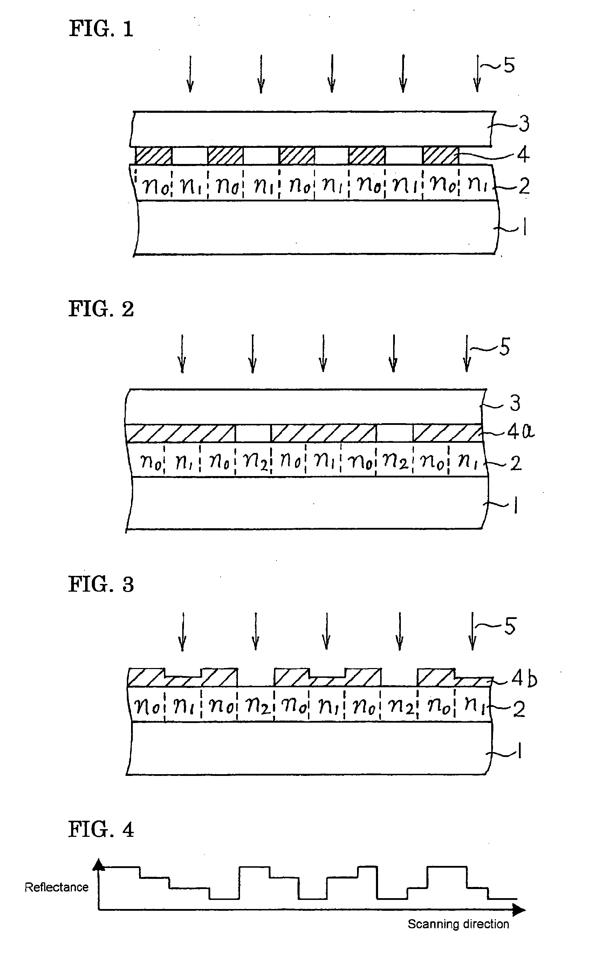

In this regard, an attempt to bring multilevel optical disk to practical application by changing the pit depth to have many levels is under progress. For example, as schematically shown in the graph in Fig. 4, if there are four pit depth levels including the zero level, four levels of reflectance can be obtained from a plurality of pits arranged in a scanning direction of the reading optical beam since the reflectance of the reading optical beam is dependent on the pit depth. This means that one of values 0, 1, 2, and 3 can be indicated by a single pit. This is equivalent to recording a 2-bit data in a single pit.

An attempt is also made to bring hologram memories into practical application (refer to Nonpatent Document 2: O plus E, vol. 25, No. 4, 2003, pp. 385-390). In principle, a hologram memory can record three-dimensional data in a three-dimensional recording medium. Such a hologram memory can store a plurality of pages of two-dimensional data as a stack. Furthermore, the two-dimensional data can be written and reconstruct page by page.

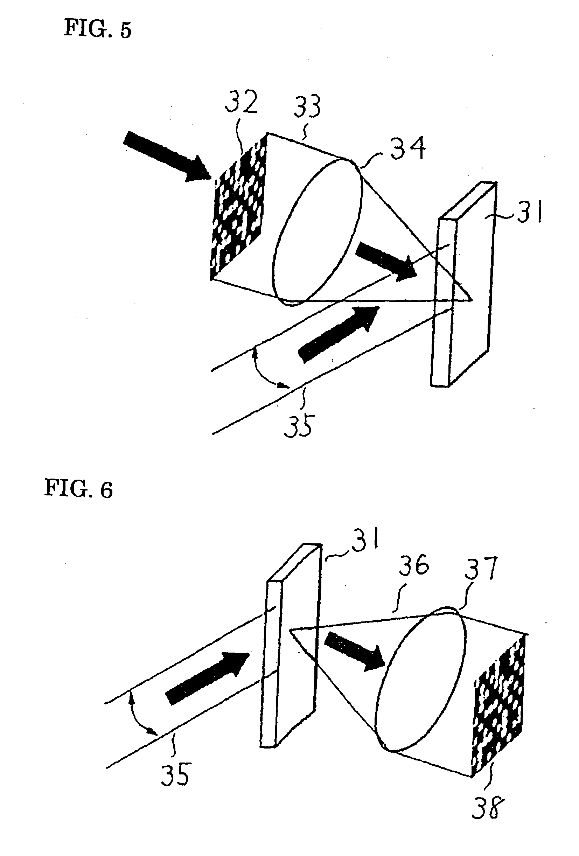

Schematic perspective views of Figs. 5 and 6 illustrate a method of writing data on a holographic recording medium and a method of reconstructing the data written on the medium, respectively. As a material of such a holographic recording medium, iron-doped lithium niobate (Fe:LiNbO₃) or a photopolymer that can increase the refractive index by irradiation of light is used.

For example, as shown in Fig. 5., when data is written, an object beam 33 including a two-dimensional digital data 32 is projected on a holographic recording medium 31 through a lens 34. Meanwhile, a reference beam 35 having a particular angle with respect to the object beam 33 is projected on the holographic recording medium 31. A hologram formed by interference between the object beam 33 and the reference beam 35 projected on the holographic recording medium 31 is recorded as the change in refractive index in the holographic recording medium 31. That is, the digital data 32 corresponding to one page can be recorded in the holographic recording medium 31 in a single step.

As shown in Fig. 6, in order to reconstruct the stored data, only the reference beam 35 used for recording is applied to the holographic recording medium 31. A reconstruction beam 36 by diffraction of the hologram in the holographic recording medium 31 is then projected on a two-dimensional image pickup device, such as a charge-coupled device (CCD), as a reconstructed pattern 38 through a projection lens 37.

In such a holographic recording medium 31, data of different pages can be stacked and recorded by changing the irradiation angle or wavelength of the reference beam 35. The recorded data can be individually reconstructed page by page by using as a read-out beam a reference beam of the same condition as the reference beam used for recording. It should be noted that such a hologram memory can record and reconstruct two-dimensional images, such as drawings and photographs, as page data.

Furthermore, Patent Document 1 (Japanese Unexamined Patent Application Publication No. 11-345419) and Nonpatent Document 3 (OPTRONICS, 2001, No. 11, pp. 143-148) disclose an integrated optical waveguide hologram memory having a structure in which single-mode planar waveguides are stacked.

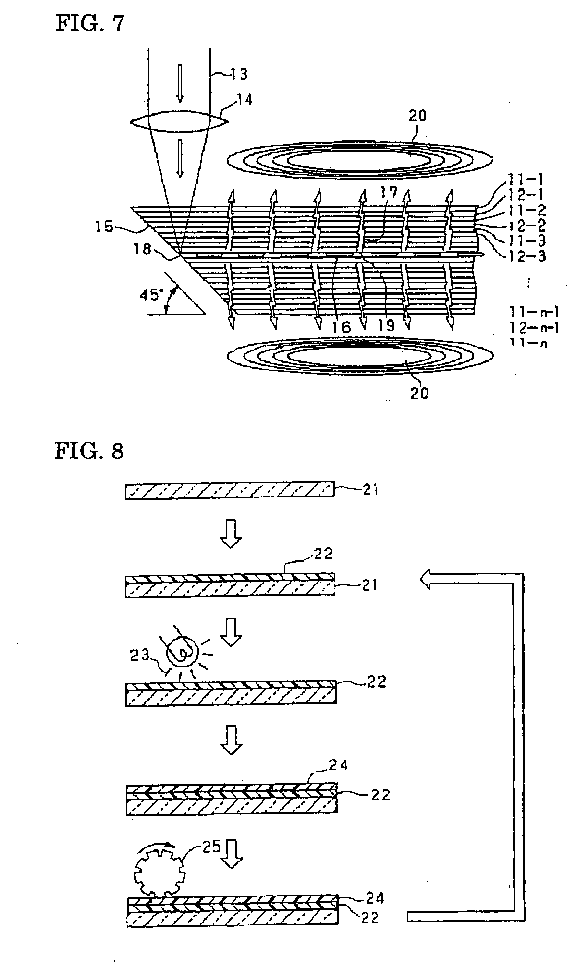

Figure 7 is a schematic cross-sectional view of one example of an integrated waveguide hologram memory disclosed in Patent Document 1. This integrated waveguide hologram memory includes a plurality of cladding layers 11-1, 11-2, ... and 11-n, and a plurality of core layers 12-1, 12-2, ... and 12-n-1 interposed between the cladding layers. Each laminate unit, cladding layer/core layer/cladding layer, functions as a planar single-mode waveguide for a laser beam 13 with a corresponding wavelength. One planar waveguide can record one page of two-dimensional data. An end face of the planar waveguide which the laser beam 13 enters through a lens 14 forms a reflecting surface 15 that defines an angle of 45° with respect to the plane of the waveguide.

In order to reconstruct page data stored in a particular planar waveguide, a reconstruction laser beam 13 is focused on a reflection line 18 (which extends in the direction orthogonal to the plane of paper of Fig. 7) of that particular planar waveguide through a (cylindrical) lens 14. A guided beam 16, which is guided into the planar waveguide from the reflection line 18, propagates in the waveguide in a planar manner and partially scattered by a light-scattering element (hologram) 19. In such a case, if the scattering element has periodicity, there exists a direction in which the phases of light scattered by the individual scattering elements are coherent, and the scattered light forms a diffracted beam 17 in that direction and travels out of the planar waveguide to form a holographic image 20. Information can be read out by capturing the holographic image 20 with a CCD or the like. Here, the holographic image 20 emerges as a diffracted beam 17 having a particular angle with respect to the plane of the waveguide; therefore, the holographic image 20 can be projected on the CCD without requiring a projection lens.

Moreover, the focus position of the laser beam 13 can be adjusted with the lens 14 so that the planar waveguide in which light is propagated can be switched and that the page information recorded in the individual planar waveguides can be read out independently. Note that the pattern of the light-scattering elements 19 corresponding to the desired information can be determined by a computing machine (refer to Nonpatent Document 3).

Figure 8 is a schematic cross-sectional view illustrating one example of a process for making an integrated waveguide hologram memory shown in Fig. 7. In this method, a UV-curable resin layer 22 is formed on a glass substrate 21 by spin-coating to a thickness of 8 µm, for example, and cured by applying UV light 23. The UV-curable resin layer 22 functions as a cladding layer.

A poly (methyl methacrylate) layer (PMMA layer) 24 is formed on the UV-curable resin layer 22 by spin-coating to a thickness of 1.7 µm, for example. A roller 25 having a surface with linear indentations at an interval of 0.46 µm, for example, is rolled on the PMMA layer 24, so that the indentation pattern is transferred onto the PMMA layer 24. The PMMA layer 24 functions as a core layer. The indentation pattern formed in the surface of the core layer serves as periodic light-scattering elements and is preliminarily determined by a computing machine in accordance with the information to be recorded.

Furthermore, a series of four steps including UV curable resin layer coating/UV exposure/PMMA layer coating/rolling is repeated 10 times, and coating of the UV curable resin layer and UV exposure are then conducted once at the end. In this manner, an integrated waveguide hologram memory having ten layers of planar waveguides stacked therein can be made.
Patent Document 1: Japanese Unexamined Patent Application Publication No. 11-345419
Nonpatent Document 1: OPTRONICS, (2001), No. 11, pp. 149-154
Nonpatent Document 2: O plus E, vol. 25, No. 4, 2003, pp. 385-390
Nonpatent Document 3: OPTRONICS, (2001), No. 11, pp. 143-148

### Disclosure of Invention

### Problems to be Solved by the Invention

According to the multilevel optical discs described above, it is not easy to accurately adjust micro pits to have depths of multi levels using a stamper. In other words, it is not easy to produce multilevel optical disk from which multileveled reflectance can be accurately detected based on the change in multileveled depths of the micro pits.

In the hologram memory described above, lithium niobate or a photopolymer is mainly used as the recording material. However, a hologram memory composed of lithium niobate has low optical sensitivity and narrow dynamic range for recording. Moreover, the hologram memory composed of lithium niobate requires high cost and has a short lifetime since the memory undergoes deterioration in which recorded data is lost by repeated read-out operation. In contrast, a photopolymer has a problem of volumetric contraction before and after recording. In other words, if the recording material expands or contracts, the pitch of the diffraction lattice in the hologram changes, and this changes diffraction conditions. Therefore, the data can no longer be read out with the reference beam used in recording. Moreover, the photopolymer, too, cannot expand the dynamic range for recording since the change Δn in refractive index by beam irradiation is as small as 0.04 or less.

In the integrated waveguide hologram memory described above, a core layer composed of PMMA and a cladding layer composed of a UV curable resin is used. The light-scattering element is composed of a UV curable resin that can fill small dents in the surface of the PMMA core layer. In other words, light is scattered by a difference Δn in refractive index between the PMMA and the UV curable resin. Here, the refractive index of PMMA is 1.492 and the refractive index of the UV curable resin is 1.480. That is, the difference Δn in refractive index between the PMMA and the UV curable resin is only 0.012. Such a small difference Δn in refractive index is not sufficient for forming a light-scattering element. Furthermore, the UV curable resin layer may undergo deterioration over time.

Based on the situations of the optical information-recording media in the earlier art, the main objective of the present invention is to provide an optical information-recording medium that can easily record information at high density and has excellent durability at low cost.

### Means for Solving the Problems

An optical information-recording medium according to one embodiment of the present invention includes a diamond-like carbon (DLC) layer disposed on a substrate, in which information is recorded on the optical information-recording medium by irradiating recording spot regions selected from a plurality of recording spot regions with an energy beam to increase the refractive index of the DLC layer in the irradiated recording spot regions.

The refractive index of the DLC layer in any selected recording spot region of the recording spot regions may be increased, by irradiation of the energy beam, to any one value of a plurality of predetermined refractive index levels.

In a method for recording information on such an optical information-recording medium, the DLC layer may be irradiated with an energy beam selected from a UV ray, an X-ray, an ion beam, and an electron beam through a metal film mask pattern including apertures that correspond to the recording spot regions where an increase in refractive index is required, so as to increase the refractive index of the DLC layer in these recording spot regions. In this recording method, the DLC layer may be further irradiated with an energy beam selected from a UV ray, an X-ray, an ion beam, and an electron beam through a metal film mask pattern including apertures that correspond to recording spot regions selected from the recorded spot regions with an increased refractive index, so as to further increase the refractive index of the DLC layer in these recording spot regions, and this step may be repeated one or more times.

In a method for recording information on the optical information-recording medium, there may be provided a step of irradiating the DLC layer with an energy beam selected from a UV ray, an X-ray, an ion beam, and an electron beam through an energy beam-absorbing mask having thickness locally varied in multiple levels corresponding to the recording spot regions, so as to increase the refractive index of the DLC layer in these recording spot regions, and the thickness of the energy beam-absorbing layer may be locally reduced as the refractive index level in the recording spot regions becomes high.

An optical information-recording medium according to another embodiment includes a DLC layer disposed on a substrate, in which information is recorded on the optical information-recording medium by saving a refractive index-modulated structure formed in the DLC layer by a hologram generated by irradiating the DLC layer with an UV ray serving as an object beam including the information to be recorded and another UV ray serving as a reference beam.

Yet another embodiment of the present invention provides a holographic optical information-recording medium of an integrated waveguide type, including a plurality of cladding layers and a plurality of DLC layers alternately stacked, wherein each of the DLC layer stores information different from those stored in other DLC layers and has a periodic light-scattering element corresponding to the recorded information, and each periodic light-scattering element includes a micro region with an increased refractive index.

A method for making this optical information-recording medium of an integrated waveguide type includes the steps of (a) depositing the DLC layer that serves as the cladding layer on a translucent substrate; (b) irradiating the DLC layer with an energy beam selected from a UV ray, an X-ray, an ion beam, and an electron beam through a metal film mask pattern including apertures corresponding to the periodic light-scattering element so as to increase the refractive index of the DLC layer in the aperture regions to thereby form the periodic light-scattering element; (c) stacking a plurality of pairs of the cladding layer and the DLC layer subjected to steps (a) and (b); and (d) stacking another cladding layer on the exposed topmost DLC layer.

It should be noted that the DLC layer is preferably deposited by plasma-enhanced CVD.

### Advantageous Effect of the Invention

According to the present invention, since a large change in refractive index can be attained by irradiation of a highly durable DLC layer with an energy beam, it is possible to provide an optical information-recording medium including a DLC recording layer which can easily record information at high density and has excellent durability at low cost.

### Brief Description of the Drawings

Figure 1 is a schematic cross-sectional view illustrating a method of making an optical information-recording medium according to an embodiment of the present invention.
Figure 2 is a schematic cross-sectional view illustrating a method of making an optical information-recording medium according to another embodiment of the present invention.
Figure 3 is a schematic cross-sectional view illustrating a method of making an optical information-recording medium according to yet another embodiment of the present invention.
Figure 4 is a schematic graph showing differences in reflectance from a plurality of pits with different depths in a multilevel optical disk.
Figure 5 is a schematic perspective view illustrating the operation of writing data on a holographic recording medium.
Figure 6 is a schematic perspective view illustrating the operation of reading out data from the holographic recording medium.
Figure 7 is a schematic cross-sectional view illustrating one example of an integrated waveguide hologram memory.
Figure 8 is a schematic cross-sectional view illustrating an example of a method for making the integrated waveguide hologram memory shown in Fig. 7.

### Reference Numerals

1: glass substrate; 2: DLC recording layer; 3: glass substrate; 4, 4a, and 4b: metal film mask pattern; 5: energy beam; 11-1 to 11-n: cladding layer: 12-1 to 12n-1: core layers; 13: reconstruction laser beam; 14: lens; 15: reflecting surface; 16: guided beam; 19: light-scattering element (hologram); 20: reconstructed hologram image; 21: glass substrate; 22: UV curable resin layer; 23: UV light; 24: poly(methyl methacrylate) (PMMA) layer; 25: roller for forming light-scattering element; 31: holographic recording medium; 32: two-dimensional data; 33: object beam; 34: lens; 35: reference beam; 36: reconstruction beam; 37: lens; 38: reconstructed two-dimensional data

### Best Mode for Carrying Out the Invention

In the course of making the present invention, the present inventors have confirmed that the refractive index of a translucent diamond-like carbon (DLC) film can be increased by applying an energy beam. This DLC film can be formed on a substrate such as a silicon substrate, a glass substrate, a polymer substrate, or the like by plasma-enhanced chemical vapor deposition (CVD). The translucent DLC film obtained by the plasma-enhanced CVD generally has a refractive index of about 1.55.

An ion beam, an electron beam, an X-ray, an ultraviolet (UV) ray, synchrotron (SR) light, or the like may be used as the energy beam for increasing the refractive index of the DLC film. It should be noted that SR light generally includes electromagnetic waves of a wide wavelength ranging from UV light to X rays.

For example, the change in refractive index can be increased to about Δn = 0.65 by injecting He ions in a dosage of 5 × 10¹⁷/cm² under an accelerating voltage of 800 keV It is also possible to modulate the refractive index by injecting ions of H, Li, B, C, or the like in the same manner. Furthermore, the change in refractive index can be increased up to about Δn = 0.65 by applying SR light having a spectrum of 0.1 to 130 nm. The change in refractive index can be increased to about Δn = 0.22 by conducting, for example, pulse irradiation with a 248 nm KrF excimer laser beam at an irradiation density of 160 mW/mm² per pulse and a frequency of 100 Hz. It should be noted that the refractive index can be modulated in the same manner by irradiation with of an excimer laser beam such as ArF (193 nm), XeCl (308 nm), or XeF (351 nm), or an Ar laser beam (488 nm). It is clear that the change in refractive index caused by irradiation of the DLC film with an energy beam is notably larger than the change in refractive index (about Δn = 0.04 or less) caused by irradiation of an existing photopolymer film with light.

### (First embodiment)

Figure 1 is a schematic cross-sectional view illustrating a method of making an optical information-recording medium according to a first embodiment of the present invention and a method of recording information. In the first embodiment, a DLC layer 2 is deposited on a glass substrate 1 by a known plasma CVD process to a thickness of, for example, 1 µm. A chromium film is deposited on another glass substrate 3 by, for example, vapor deposition and subjected to stepper exposure and etching to form a patterned chromium film which serves as a metal film mask pattern 4. The metal film mask pattern 4 includes a plurality of micro apertures corresponding to a plurality of recording spot regions.

The metal film mask pattern 4 thus prepared is placed on the DLC layer 2. Then, for example, a UV ray 5 having a wavelength of 250 nm and an energy density of 20 mW/mm² is applied to the DLC layer 2 through the metal film mask pattern 4 for about one hour. As a result, the recording spot regions of the DLC layer 2 shielded from the UV ray 5 by the metal film mask pattern 4 maintain an initial refractive index of, for example, n₀ = 1.55 after the deposition of the DLC film. The refractive index of the recording spot regions irradiated with the UV ray 5 through apertures in the metal film mask pattern 4 can be increased to about n₁ = 1.70.

In this manner, recording spot regions having two levels of refractive index, i.e., n₀ and n₁, are formed in the DLC layer 2 to thereby record binary signals. By irradiating this optical information-recording medium with a reconstruction beam, the amount of light reflected at or passing through the recording spot regions change according to the refractive indexes n₀ and n₁, to thereby read out information recorded in a binary form.

### (Second embodiment)

In a second embodiment of the present invention, multilevel recording is conducted in an optical information-recording medium including a DLC layer. In the second embodiment, binary recording is first conducted as in the first embodiment illustrated in Fig. 1.

Subsequently, as shown in the schematic cross-sectional view in Fig. 2, a second metal film mask pattern 4a is placed on the DLC layer 2. The second metal film mask pattern 4a includes micro apertures that correspond to recording spot regions selected from the recording spot regions having a refractive index increased to n₁. The DLC layer 4 is again irradiated with the UV ray 5 through the second metal film mask pattern 4a.

As a result, the refractive index of the recording spot regions irradiated with the UV ray 5 through the apertures in the second metal film mask pattern 4a further increases from n₁ to n₂. In this manner, ternary signals can be recorded. As is evident from the above, further multileveled recording is possible by repeating UV irradiation through additional metal film mask patterns.

### (Third embodiment)

Figure 3 is a schematic cross-sectional view illustrating a method of making an optical information-recording medium according to a third embodiment of the present invention and a method of recording information. In the third embodiment also, the DLC layer 2 is deposited on the glass substrate 1 by plasma-enhanced CVD.

However, a chromium film is deposited on the DLC layer 2 and subjected to stepper exposure and etching to form a patterned chromium film, which serves as a metal film mask pattern 4b. In this case, the stepper exposure and etching are conducted in two or more stages so that, in the example shown in Fig. 3, the thickness of the metal film mask pattern 4b is varied in three levels including zero in a plurality of micro regions corresponding to a plurality of recording spot regions. The DLC layer 4 is irradiated with the UV ray 5 through this metal film mask pattern 4b.

Although the UV ray 5 cannot pass through the thickest regions in the metal film mask pattern 4b, the UV ray 5 can partially pass through the thinner regions. For example, a 250 nm UV ray can partially pass through the chromium film with a thickness of about 60 nm or less. In other words, the metal film mask pattern 4b serves as an energy beam-absorbing layer that absorbs the energy beam according to the thickness varied in multiple levels for micro regions corresponding to the recording spot regions. Therefore, recording spot regions with three different levels of refractive index are formed in the DLC layer 2 by irradiating the DLC layer 4 with the UV ray 5 through the metal film mask pattern 4b, thereby enabling ternary recording.

Naturally, an X-ray, ion beam, or electron beam having higher penetrability than UV can partially pass through a significantly thicker metal film and may be used with a metal film mask pattern 4b with further multileveled thicknesses, thereby enabling multilevel recording. It should be noted that a metal other than chromium, such as gold, nickel, or tungsten, can be suitably used to make the metal mask depending on the design of the amount of the transmitting excimer beam.

### (Fourth embodiment)

As in the cases described with reference to Figs. 5 and 6, in an optical information-recording medium of a fourth embodiment, two-dimensional digital data is holographically recorded in the DLC recording layer. That is, a DLC layer having a thickness of about 1 µm deposited on a glass substrate by plasma-enhanced CVD is used as the holographic recording medium 31 in Fig. 5. Moreover, the chromium film deposited on the glass substrate is subjected to stepper exposure and etching to form a metal film mask pattern indicating the two-dimensional digital data, and this metal film mask pattern is used as the two-dimensional digital data 32 in Fig. 5.

For example, a 250 nm UV ray with an energy density of 20 mW/mm² is used as the object beam 33 that passes through the two-dimensional digital data 32 in the chromium film, and the object beam is projected on the holographic recording medium 31 through the lens 34. Meanwhile, an UV ray serving as the reference beam 35 is applied to the holographic recording medium 31 composed of DLC, and a hologram formed by interference between the object beam 33 and the reference beam 35 is recorded as changes in reflectance in the DLC recording medium 31.

In order to reconstruct data recorded in this manner, only the UV ray used as the reference beam 35 during the recording is applied onto the holographic recording medium 31 composed of DLC. The reconstruction beam 36 of the UV ray diffracted by the hologram in the recording medium 31 is projected as the reconstructed pattern 38 through the projection lens 37 onto a two-dimensional image pickup element, such as CCD.

### (Fifth embodiment)

In a fifth embodiment of the present invention, an integrated waveguide hologram memory is made. In the fifth embodiment, the DLC layer 2 is deposited on the glass substrate 1 having a thickness of 100 nm, for example, by a known plasma-enhanced CVD process to a thickness of, for example, 100 nm, as in the case shown in Fig. 1. A chromium film is deposited on another glass substrate 3 by vapor deposition and subjected to stepper exposure and etching to form a patterned chromium film which serves as a metal film mask pattern 4. This metal film mask pattern 4 corresponds to a single page of data and includes a plurality of linear micro apertures with a periodicity corresponding to a periodic light-scattering element (hologram) 19 shown in Fig. 7. These linear micro apertures may be considered to extend in a direction orthogonal to the plane of paper in Fig. 1.

The metal film mask pattern 4 thus prepared is placed on the DLC layer 2. Then, for example, a UV ray 5 having a wavelength of 250 nm and an energy density of 20 mW/mm² is applied to the DLC layer 2 through the metal film mask pattern 4 for about one hour. As a result, the recording spot regions of the DLC layer 2 shielded from the UV ray 5 by the metal film mask pattern 4 maintain an initial refractive index of, for example, n₀ = 1.55 after the deposition of the DLC film. In contrast, the refractive index of the periodic linear regions irradiated with the UV ray 5 through the apertures in the metal film mask pattern 4 can be increased to about n₁ = 1.70, for example.

Forty pairs of the DLC layer 2 containing a hologram corresponding to a single page of data and the glass substrate 1 are stacked, and another glass substrate 1 having a thickness of 100 µm is stacked on the surface of the topmost DLC layer 2. In this manner, an integrated waveguide hologram memory having a thickness of about 4 mm is produced. The integrated waveguide hologram memory prepared in the fifth embodiment is read by the same method as described above with reference to Fig. 7.

### Industrial Applicability

According to the present invention, a large change in refractive index can be yielded by irradiation of a highly durable DLC layer with an energy beam; thus, an optical information-recording medium including a DLC recording layer which can easily record information at high density and has high durability can be provided at low cost.

## Claims

1. An optical recording medium comprising a diamond-like carbon (DLC) layer disposed on a substrate, wherein information is recorded on the optical information-recording medium by irradiating recording spot regions selected from a plurality of recording spot regions with an energy beam to increase the refractive index of the DLC layer in the irradiated recording spot regions.

2. The optical recording medium according to claim 1, wherein the refractive index of the DLC layer in any selected recording spot region of the recording spot regions can be increased, by irradiation of the energy beam, to any one value of a plurality of predetermined refractive index levels.

3. A method for recording information on the optical information-recording medium according to claim 1, comprising:
irradiating the DLC layer with an energy beam selected from a UV ray, an X-ray, an ion beam, and an electron beam through a metal film mask pattern including apertures that correspond to the recording spot regions where an increase in refractive index is required, so as to increase the refractive index of the DLC layer in these recording spot regions.

4. The method for recording information on the optical information according to claim 3, further comprising:
irradiating the DLC layer with an energy beam selected from a UV ray, an X-ray, an ion beam, and an electron beam through a metal film mask pattern including apertures that correspond to recording spot regions selected from the recorded spot regions with an increased refractive index, so as to further increase the refractive index of the DLC layer in these recording spot regions,
wherein this step is repeated one or more times.

5. A method for recording information on the optical information-recording medium of claim 2, comprising:
a step of irradiating the DLC layer with an energy beam selected from a UV ray, an X-ray, an ion beam, and an electron beam through an energy beam-absorbing mask having thickness locally varied in multiple levels corresponding to the recording spot regions, so as to increase the refractive index of the DLC layer in these recording spot regions,
wherein the thickness of the energy beam-absorbing layer is locally reduced as the refractive index level in the recording spot regions becomes high.

6. An optical information-recording medium comprising a DLC layer disposed on a substrate, wherein information is recorded on the optical information-recording medium by saving a refractive index-modulated structure formed in the DLC layer by a hologram generated by irradiating the DLC layer with an UV ray serving as an object beam including the information to be recorded and another UV ray serving as a reference beam.

7. A holographic optical information-recording medium of an integrated waveguide type, comprising a plurality of cladding layers and a plurality of DLC layers alternately stacked, wherein each of the DLC layer stores information different from those stored in other DLC layers and has a periodic light-scattering element corresponding to the recorded information, and each periodic light-scattering element comprises a micro region with an increased refractive index.

8. A method for making the optical information-recording medium of claim 7, comprising the steps of.
(a) depositing the DLC layer that serves as the cladding layer on a translucent substrate;
(b) irradiating the DLC layer with an energy beam selected from a UV ray, an X-ray, an ion beam, and an electron beam through a metal film mask pattern including apertures corresponding to the periodic light-scattering element so as to increase the refractive index of the DLC layer in the aperture regions to thereby form the periodic light-scattering element;
(c) stacking a plurality of pairs of the cladding layer and the DLC layer subjected to steps (a) and (b); and
(d) stacking another cladding layer on the exposed topmost DLC layer.

9. A method for making the optical information-recording medium according to any one of claims 1, 2, 6, and 7,
wherein the DLC layer is deposited by plasma-enhanced CVD.
